**Europäisches Patentamt**

**European Patent Office**

**Office européen des brevets**

(19)

(11) Veröffentlichungsnummer: **0 174 573**
**B1**

(12) # EUROPÄISCHE PATENTSCHRIFT

(45) Veröffentlichungstag der Patentschrift:
23.11.88

(21) Anmeldenummer: 85110990.0

(22) Anmeldetag: 30.08.85

(51) Int. Cl.⁴: **E 05 F  1/10,** E 05 D  15/40,
F 16 F  1/12

(54)  Abgeschirmte Schraubenzugfeder für Tore oder dergleichen.

(30)  Priorität: 14.09.84  DE 8427190 U
02.11.84  DE 8432186 U

(43)  Veröffentlichungstag der Anmeldung:
19.03.86 Patentblatt 86/12

(45)  Bekanntmachung des Hinweises auf die Patenterteilung:
23.11.88 Patentblatt 88/47

(84)  Benannte Vertragsstaaten:
AT BE CH DE FR GB IT LI NL SE

(56)  Entgegenhaltungen:
DE-A-3 026 612

(73)  Patentinhaber: **HÖRMANN KG AMSHAUSEN,**
**D-4803 Steinhagen/Westfalen (DE)**

(72)  Erfinder: **Hörmann, Michael, Dipl.- Ing., Upheider**
**Weg 94, D-4830 Steinhagen (DE)**

(74)  Vertreter: **Flügel, Otto, Dipl.- Ing., Lesser, Flügel**
**& Säger Patentanwälte Richard- Strauss- Strasse**
**56 Postfach 81 05 40, D-8000 München 80 (DE)**

**Beschreibung**

Die Erfindung bezieht sich auf eine abgeschirmte Schraubenzugfeder für Tore, Türen oder dgl. Gebäudeabschlüsse, insbesondere als Gewichtsausgleichseinrichtung für über Kopf bewegbare Torblätter, mit den Merkmalen des Oberbegriffes des Anspruches 1.

Zugfedern der in Frage stehenden Art werden unter einer bestimmten Vorspannung, die einer kürzesten Betriebslänge der Feder entspricht, und einer Höchstspannung, die der maximalen Betriebsausdehnung der Feder entspricht, betrieben und mit einer Umhüllung versehen, die die Feder über diesen Betriebsausdehnungsbereich hinweg dadurch umfaßt, daß sie aus zwei teleskopartig ineinander verschiebbaren Hülsen besteht und somit über den Betriebsdehnungsweg der Feder hinweg längenveränderlich ausgebildet ist. Damit wird verhindert, daß man zwischen die Schraubenwendel eingreifen und sich somit beim Zusammenziehen der Federn verletzen kann. Tritt ein Federbruch auf, so werden schlagartig erhebliche Federkräfte frei, die dazu führen, daß die durch den Bruch entstehenden Federnteile, deren Zahl durch Bruch an mehr als einer Stelle der Feder größer als zwei betragen kann, sich nicht nur in Federlängsrichtung, sondern auch quer dazu zu entfernen versuchen. Durch die Umhüllung werden diese Teile daran gehindert, wodurch eine hohe Gefahr, die beim Brechen der Feder solch hohem Kraftspeichervermögens für in der Nähe befindliche Personen und Sachen auftritt, sicher vermieden wird.

Bei einer bekannten Schraubenzugfeder mit längenveränderlicher Schutzumhüllung der in Frage stehenden Art - US-A-3 402 922 - sind die beiden, die längenveränderiche Umhüllung bildenden, teleskopartig ineinander verschiebbaren Hülsen aus Blechen gebogen, die mit ihren beiden freien Längsseitenrändern zu einer Hülse zusammenfügbar sind. Da dies durch Schrauben geschieht, lassen sich diese Hülsen nach Montage der Federn um diese herum anordnen. Die beiden Hülsen sind an ihren, den Federenden zugewandten Endbereichen an dem Schraubenfederkörper stirnseitig abgestützt, damit die Feder im Zuge der Ausdehnung die jeweilige Hülse hält bzw. mitnimmt, wodurch die teleskopartige Verschiebung und damit die Längenänderung entsprechend der Ausdehnung der Feder erreicht werden kann. Diese Abstützung erfolgt dabei mit Hilfe von Stiften, die in den Endbereichen der Hülsen durch deren Wandung hindurch geführt werden und die stirnseitige Öffnung der Hülse etwa diametral durchgreifen. Bei Federbruch versuchen die Federteile aus der Hülse nach oben und nach unten auszutreten, wodurch sie eine Schlagbeanspruchung auf die Stifte bzw. deren Halterung in den Hülsen ausüben. Zugleich treten Quer zur Längsrichtung der Feder gerichtete Schlagkräfte auf, die versuchen, die Hülsen durch seitliches Verschwenken auseinanderzutreiben. Die hierbei insgesamt auftretenden Kräfte sind sehr hoch, sie müssen zunächst durch die Stifthalterungen im Bereich des Hülsenendes aufgenommen werden können, zum zweiten muß auch in größtmöglicher Dehnungslage der Feder der Übergriff zwischen den Hülsen so lang bemessen sein, daß diese nicht außer Eingriff geraten können. Dies führt dazu, daß an die Abmessung und die Materialeigenschaften dieser Hülsen entsprechend große Anforderungen gestellt werden müssen.

Es sind eine Reihe von Vorschlägen bekanntgeworden, eine Schraubenzugfeder gegen Bruch dadurch zu sichern, daß man ein Fangelement durch ihr Inneres führt - beispielsweise DE-B-2 923 327 -, und zwar mit dem Vorteil, daß durch Aufnahme von Verformungsarbeit an dem Element in der Feder gespeicherte und bei Bruch frei werdende Energie aufgenommen wird. Dabei ist jedoch keine Eingriffssicherung zwischen die Schraubenfederwendel vorgesehen und damit die Handhabung der Feder während des Einbaues entsprechend vorsichtig zu gestalten. In der US-A-3 575 404 ist eine Feder der in Frage stehenden Art vorgeschlagen, bei welcher neben einer teleskopartig ineinandergreifenden, längenveränderlichen Umhüllung der Feder eine zusätzliche Fangeinrichtung aus zwei Drahtschlaufen vorgesehen ist, deren jede an einem Federendbereich festgelegt ist und die sich im dazwischenliegenden Bereich durchgreifen, derart, daß die Feder ungehindert durch die Schlaufen in ihre größte Betriebsausdehnungsstellung gelangen kann. Bei Zusammenziehen der Feder verschieben sich die Schlaufen entsprechend in Parallellage zueinander. Diese gesicherte Schraubenzugfedereinrichtung ist besonders aufwendig, auch was ihre Federhalterung anbelangt. Die im Inneren der Schraubenfeder befindlichen Drahtschlaufen verursachen bei Dehnungs- bzw. Zusammenziehungsbewegungen der Federn entsprechende Geräusche.

Der Erfindung liegt die Aufgabe zugrunde, eine Schraubenzugfeder der in Frage stehenden Art zu schaffen, die bei voller Schutzfähigkeit gegen Fingereingriff und Abgeschleudertwerden im Falle des Federbruches im Betrieb einfach und unter minimalem Aufwand an Menge und/oder Wert des eingesetzten Materials herstellbar ist sowie eine bequeme und gefahrlose Handhabung erlaubt.

Ausgehend von einer abgeschirmten Schraubenzugfeder mit den Merkmalen des Oberbegriffes des Anspruches 1 wird diese Aufgabe erfindungsgemäß durch dessen kennzeichnende Merkmale gelöst.

Die erfindungsgemäß ausgestaltete Schraubenzugfeder ist mit einer Umhüllung aus zwei, drei oder auch mehr Hülsen versehen, deren den Federenden zugewandten Endbereiche mit einem Deckel an dem Schraubenwendelkörper abgestützt sind.

Aufgrund dieses Deckelabschlusses wird ein großflächiger Halt gegen Austreten der Feder aus der Umhüllung im Falle des Bruches gewährleistet. Der Deckel ist über seinen gesamten Umfangsbereich an der zugehörigen Hülse befestigt bzw. ausgebildet, so daß wegen der dadurch erreichten Lastverteilung das Material der Umhüllung entsprechend schwach und leichtgewichtig gehalten werden kann. Soweit bleibendverformbarer Werkstoff verwendet wird, kann durch Verformungsarbeit ein Teil der bei Federbruch frei werdenden Energie aufgenommen werden. Die einzelnen Hülsen sind gegen Ausgleiten aus dem Teleskopeingriff durch Anschläge gesichert, die an den jeweiligen Hülsenenden selbst ausgebildet sind. Damit wird erreicht, daß unter den bei Federbruch auftretenden Kräften die Hülsen in keinem Falle außer Eingriff geraten können und damit die Umhüllung vollständig erhalten bleibt, und zwar auch bei im Betriebsbereich maximaler Federdehnung. Dies gilt sowohl hinsichtlich der Kräfte, die beim Federbruch in Längsrichtung der Umhüllung auftreten, als auch für die Querkräfte, die die Hülsen seitlich zu verschwenken und damit außer Eingriff zu bringen suchen.

Hält man die Hülsen lediglich im Bereich der Federenden, wie dies beim Stand der Technik der Fall ist, so muß man den Überlappungsbereich der Hülsen auch bei maximaler Betriebsdehnung der Feder so groß wählen, daß die Knickfestigkeit der Umhüllung in diesen Bereich ausreicht, um ein Seitwärtsverschwenken der Hülsen zu verhindern. Die Hülsen müssen daher länger und damit schwerer bzw. stabiler ausgebildet werden, als dies angesichts der erfindungsgemäßen Lehre erforderlich ist.

Von besonderer Bedeutung ist, daß erfindungsgemäß die vorgefertigte Feder selbst im völlig ungespannten Zustand mit der Umhüllung versehen wird, dergestalt, daß die Hülsen dabei vorzugsweise in ihrer völlig zusammengeschobenen Teleskopverschiebelage sind. Lediglich die Anschlußhaken der Feder ragen an beiden Enden durch entsprechende Öffnungen aus den Deckeln hervor. Damit wird erreicht, daß die Feder als selbständiges Element mit der Umhüllung versehen werden kann, bevor sie zum Einsatz gelangt. Die stirnseitigen Abschlüsse bzw. Deckel der Umhüllung können damit maschinell an den entsprechenden Hülsenendbereichen vorgesehen bzw. aufgebracht werden, der Transport und die Lagerhaltung vereinfachen sich entsprechend und beim Einbau der Feder ist von vornherein der Schutz der Umhüllung gegeben, was für den regelmäßigen Fall des Einbaues unter Federvorspannung von besonderer Bedeutung ist. Auch bei der Montage ist also vollständiger Schutz von vornherein gegeben und die Handhabung erleichtert.

Die Feder kann aber auch in weiterer besonders bevorzugter Ausführung der Erfindung so ausgebildet sein, daß die Umhüllung in völlig zusammengeschobenem Zustand, also geringster Längsausdehnung, länger ist als der völlig ungedehnte Federwendelkörper. Dieser kann unter gewisser Vorspannung, die bis zur geringsten Betriebsspannung im Einbauzustand reichen kann, entsprechend gedehnt sein. Auch so kann die Feder mit ihrer Umhüllung als selbständiges Bauelement vogefertigt zur Verfügung gestellt werden, bevor sie am Betriebsort eingebaut wird. Ebenso ist dabei eine maschinelle Fertigung dieses Bauelementes aus vorgespannter Feder und zusammengeschobener Umhüllung möglich, und zwar mit der Folge sicherer und erleichterter Handhabung beim Einbau oder Austausch. Dabei wird man hinsichtlich des hier angesprochenen Verwendungszwecks und der Federdehnung im Betrieb zwischen geringster Vorspannung und höchster Spannungsdehnung mit einer zweiteiligen Teleskop-Umhüllung auskommen. Für diesen Fall - aber auch bei Umhüllung zuvor abgehandelter Art bei dreiteiligem Teleskop zweckdienlich - sind im Zuge der Montage Sperren angebracht, die die Feder daran hindern, sich in die Umhüllung hineinversetzt zusammenzuziehen. Das können Elemente sein, die im Bereich der Anschlußhaken eingeführt sind und sich außen an den Deckeln der Hülsen abstützen, grundsätzlich aber auch Stifte oder dgl., die im Bereich der äußeren Federwendel des Federwendelkörpers diese durchgreifend durch die Hülsenwandung geführt sind und nach Einbau dieses vorgefertigten Federelementes entfernt werden können.

Erfindungsgemäß wird also bei der Herstellung derart verfahren, daß die Hülsen insoweit vorgefertigt zu dem Teleskoprohr zusammengesetzt werden, in welches, dann der mit dem Anschlußhaken vorgefertigte Schraubenfederkörper eingesetzt wird, worauf das Teleskoprohr stirnseitig bis auf die Durchtrittsöffnungen für die Anschlußhaken bzw. diese Durchtrittsöffnungen und einen Durchführungsschlitz für ein Lochband unter Bildung des bzw. Aufsetzung des insoweit vorbereiteten Deckels verschlossen wird und als abgeschlossenes Bauteil für den Einbau am Ort der Fertigung oder der Verwendung des Tores zur Verfügung steht.

Wenn die Längenänderung, der die Feder bestimmungsgemäß unterworfen ist, die doppelte Länge des völlig ungedehnten Federkörpers nicht übersteigt, kann die Umhüllung aus zwei Hülsen gebildet werden. Vielfach jedoch, insbesondere beim Einsatz als Gewichtsausgleichsfeder für über Kopf bewegbare einteilige Torblätter, wird die Feder stärker gedehnt, insbesondere bis zu dem etwa Dreifachen des ungedehnten Federkörpers. Für diesen Fall besteht die Umhüllung aus drei Hülsen, die in der vorgeschilderten Weise miteinander untrennbar verbunden sind.

Wenn die niedrigste Betriebsvorspannung und die höchste Betriebsausdehnung sich im Betrieb eines Federdehnweges von 1 : 2 befinden, sich die Feder in diesem Betriebsbereich also nicht mehr als um das Doppelte ihrer Länge ausdehnt, die sie im Zustand der Betriebsvorspannung einnimmt, kann die Umhüllung aus zwei Hülsen bestehen, die im zusammengeschobenen Zustand der Länge des vorgespannten Federkörpers entsprechen und daher in dieser Vorspannlänge als Bauelement hergestellt und für den Einbau zur Verfügung gestellt werden können.

Die stirnseitigen Abschlüsse nach Art eines Deckels können durch entsprechende Abbiegungen eines in mehrere Abschnitte unterteilten Hülsenendbereiches gebildet werden, und zwar sogleich unter Freilassung der Durchtrittsöffnung für den Anschlußhaken der Feder und ggfs. zusätzlich des Duchführungsschlitzes für die Aufnahme eines Federaufnahmebandes in dem einen, insbesondere in der Betriebslage oberen Deckel. Nach dem Abbiegen entsprechender Wandungsteile zu dem Deckel kann ein versteifender Verschweißvorgang stattfinden. Der Deckel kann aber auch als gesondertes Bauteil vorgefertigt und dann auf die Hülse aufgesetzt werden, dort wird er durch Verschweißen oder insbesondere aber bevorzugt durch Umbördeln um einen Verdickten Randbereich des Hülsenendbereiches festgelegt.

Die jeweils einer Nachbarhülse zugewandten Endbereiche sind mit nach innen bzw. nach außen ragenden Vorsprüngen versehen, die insbesondere hakenförmig derart ausgebildet sind, daß sie mit den in der völligen Ausziehstellung des Telekoprohres jeweils benachbarten hakenförmigen Vorsprüngen der anderen Hülse in einen krallenartigen Eingriff gelangen, der insbesondere über den gesamten Randbereich hinweg vorgesehen wird, so daß eine gute Lastverteilung stattfindet.

Diese Hülsenfertigung und das Verschließen mit einem Deckel ist der Serienfertigung zugänglich, was bei solchen Massenartikeln besonderes Gewicht hat.

Weitere Ausführungsformen der Erfindung ergeben sich aus den Unteransprüchen. In der Zeichnung sind Ausführungsbeispiele wiedergegeben, deren nachfolgende Beschreibung die Erfindung näher erläutern.
Es zeigen

Figur 1 eine Innenansicht der linken Seite eines geöffneten Tores mit einer Feder nach einem Ausführungsbeispiel;
Figur 2 eine Seitenansicht der linken Seite dieses geöffneten Tores;
Figur 3 eine schematische Seitenansicht der umhüllten Feder nach dem Ausführungsbeispiel;
Figur 4 eine Innenansicht der linken Seite des geschlossenen Tores mit auf geringere Vorspannung ausgerichteter Einhängung in ein Federhalteband;
Figur 5 eine Seitenansicht auf die linke Seite des geschlossenen Tores mit auf hohe Vorspannung in das Federhalteband eingehängter Feder;
Figur 6 eine schematische Längsschnittdarstellung der ungespannten Feder mit Umhüllung aus drei Hülsen, nach einem Ausführungsbeispiel;
Figur 7 eine schematische Längsdarstellung durch die Umhüllung aus drei Hülsen im vollständig ausgezogenen Zustand;
Figur 8 eine Draufsicht auf den im Betriebszustand oberen Deckel des Ausführungsbeispieles;
Figur 9 eine schematische Längsschnittdarstellung einer vorgespannten Feder mit einer Umhüllung aus zwei Hülsen nach einem anderen Ausführungsbeispiel.

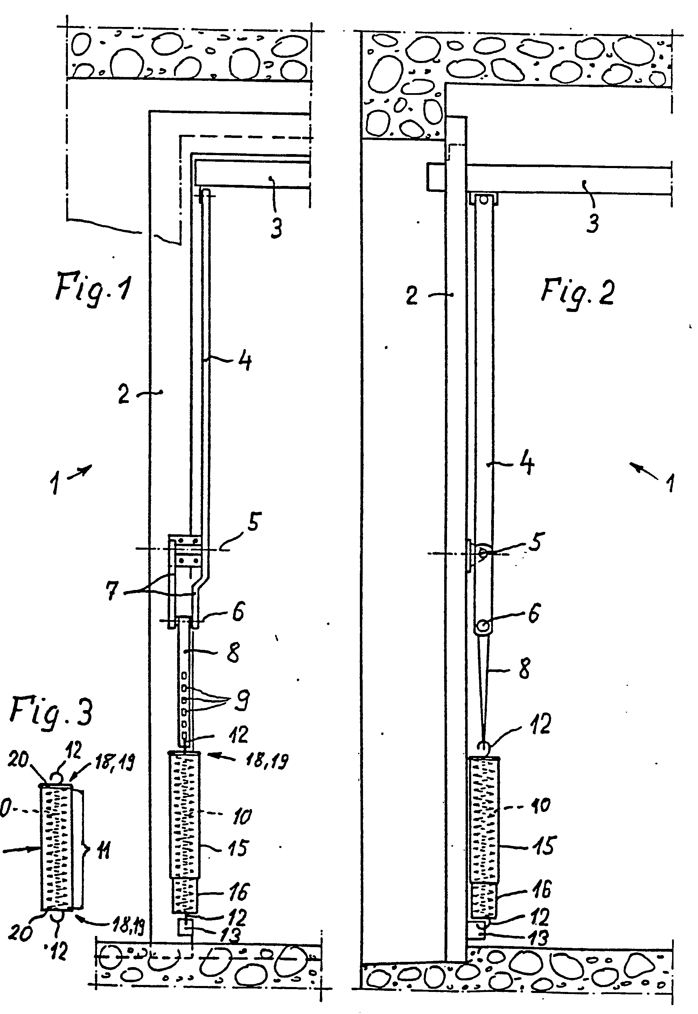

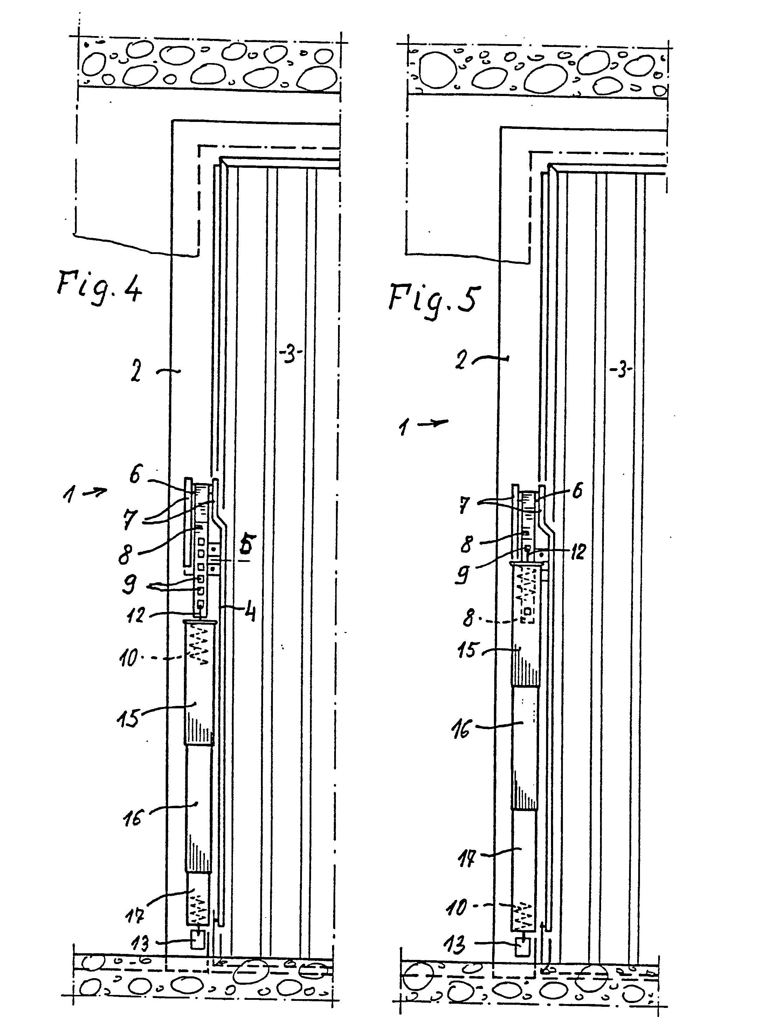

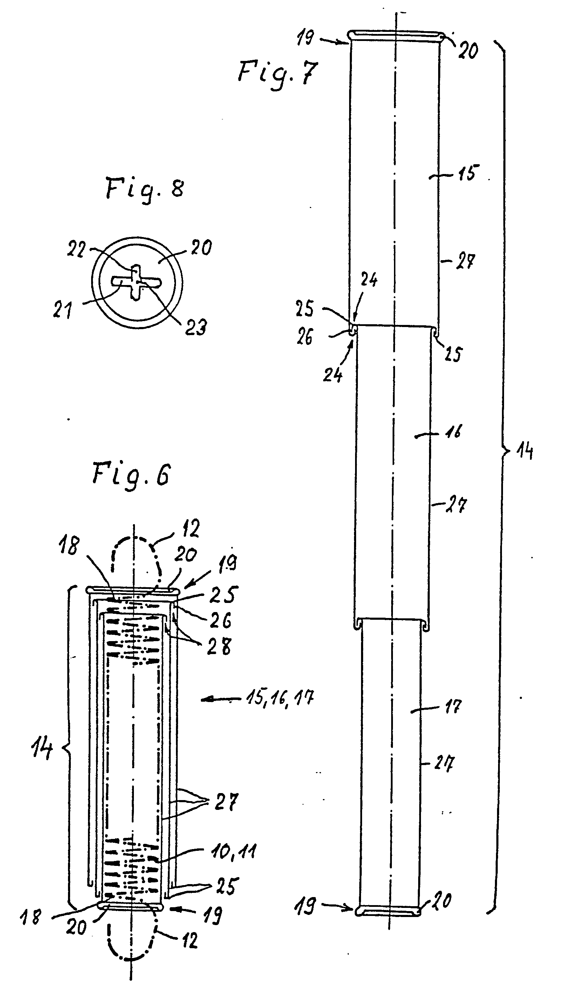

Das in den Figuren 1, 2, 4 und 5 skizzenhaft bereichsweise wiedergegebene Garagen-Einblatt-Überkopftor 1 weist einen mit dem die zu verschließende Toröffnung umgebenden Mauerwerk verbundenen Zargenrahmen 2 auf, demgegenüber das Torblatt 3 zwischen einer Öffnungslage - Figuren 1 und 2 - und einer Schließlage - Figuren 4 und 5 - hin- und herbewegbar ist. Das Torblatt ist in seinem dem Garageninneren zugewandten Bereich in nicht dargestellter Weise mittels Rollen in horizontal verlaufenden Führungsschienen längsverschiebbar gehalten, während in seinem vorderen Kantenbereich das eine Gelenkende des längeren Armes eines doppelarmigen Hebels 4 eingreift, der um eine Achse 5 gegenüber dem Zargenrahmen verschwenkbar gelagert ist. Am Ende des kürzeren Hebelarmes, der als Doppelarm 7 ausgebildet ist, befindet sich eine Tragachse 6, um welche ein Federaufnahmeband 8 herumgelegt ist, das eine Reihe von Aufnahmeöffnungen 9 für das wahlweise Einhängen einer Gewichtsausgleichsfeder aufweist. Diese Gesamtanordnung findet sich spiegelbildlich im rechten Bereich des Tores wieder. Überführt man das Torblatt 3 aus der Öffnungslage in die Schließlage, so schwenkt der Hebel 4 um die Achse 5 aus der in den Figuren 1 und 2 wiedergegebenen Lage mit der nunmehr bogenförmig nach unten bewegten Vorderkante des Torblattes 3 im Gegenuhrzeigersinn. Dabei wird der Doppelarm 7 nach oben verschwenkt und die Gewichtsausgleichsfeder gespannt. Diese hier beispielsweise beschriebene Torkonstruktion ist bekannt.

Die hier zum Gewichtsausgleich verwendete, insgesamt mit 10 bezeichnete Feder weist einen Federkörper 11 auf, der die Federwendel umfaßt. Die Federwendel laufen beidseitig in Anschlußhaken 12 aus, die dem Befestigen bzw. Einhängen der Feder dienen. Der in der Betriebslage nach unten weisende Anschlußhaken 12 wird in einer Haltekonsole 13 eingehängt, während der nach oben weisende Haken 12 in eine der Aufnahmeöffnungen 9 des Federaufnahmebandes 8 eingehängt ist.

Figur 3 zeigt die Feder in völlig ungespanntem Zustand, wie sie also vor dem Einhängen in die Betriebsstellung an dem Tor angeliefert wird. In diesem Anlieferzustand ist der Federkörper 11 bereits völlig von einer Umhüllung 14 umgriffen, die in diesem Beispiel aus drei Hülsen 15, 16, 17 gebildet ist, die nach Art eines Teleskoprohres längenverschiebbar miteinander in Verbindung stehen, wie dies später noch deutlicher dargelegt wird. Die Umhüllung bzw. die den beiden Federenden zugewandten Endbereiche 19 der Hülsen 15 und 17 sind mit Deckeln 20 verschlossen, die eine Durchtrittsöffnung für die Anschlußhaken 12 aufweisen, wie dies ebenfalls später noch genauer geschildert wird.

Figur 3 zeigt die nicht eingesetzte und damit völlig ungespannte Feder 10, deren Federkörper 11 also in der Regel aneinander anliegende oder doch nur geringfügig beanstandete Federwendel aufweist. In diesem Zustand ist der Federkörper 11 bereits vollständig von der Umhüllung 14 eingefaßt. Wie später noch geschildert, ist in dieser Verschiebestellung der Umhüllung 14 das Teleskoprohr aus den Hülsen 15 bis 17 praktisch völlig zusammengeschoben - Fig. 6. In den Figuren 1 und 2, die der lediglich vorgespannten und im Betrieb geringst gedehnten Zustand der Feder bei geöffnetem Tor entsprechen, ist die Umhüllung 14 entsprechend wenig in die Länge gezogen, so daß neben der Hülse 15 die Hülse 16 sichtbar wird. In diesem Zustand befindet sich die Tragachse 6 des Doppelhebels 7 in ihrer niedrigsten Stellung. In den Fig. 4 und 5 ist das Torblatt geschlossen dargestellt, die Tragachse 6 ist durch Verschwenken des Hebels 4 in ihre höchstmögliche Lage gelangt, wodurch die Feder 10 in ihre höchste Betriebsausdehnungsstellung überführt wird. Wie man den Figuren 1 bis 5 somit entnehmen kann, wird der Federkörper 11 durch Vorspannung und Betriebsspannung um mehr als das Doppelte seiner Länge im ungedehnten Zustand ausgezogen, so daß die Umhüllung insgesamt drei Hülsen aufweist.

In Fig. 4 ist der obere Anschlußhaken 12 der Feder 10 in die unterste Aufnahmeöffnung 9 des Federaufnahmebandes eingehängt, was bedeutet, daß die Federvorspannung entsprechend gering ist - Figuren 1 und 2 - und daß die Feder bei geschlossenem Torblatt eine Höchstausdehnung erfährt, die ebenfalls entsprechend gering ist.

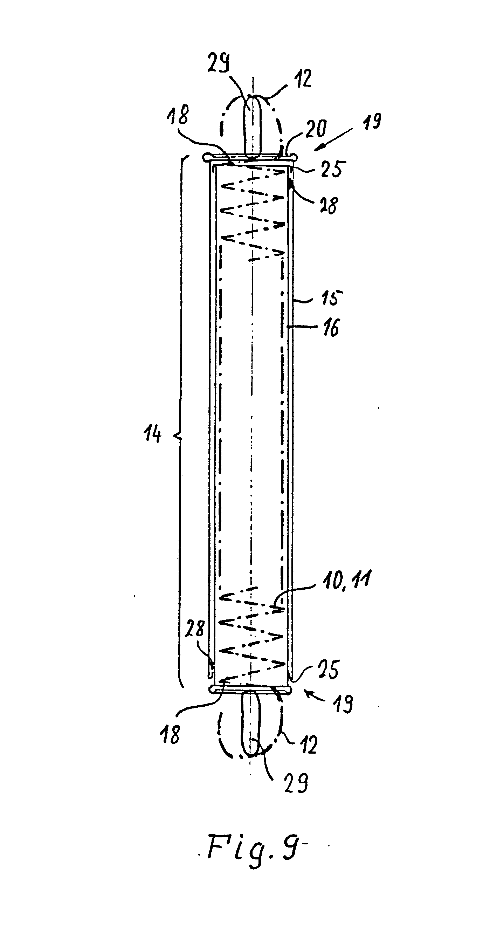

Zur Anpassung der Ausgleichsfederwirkung an das Torblattgewicht, das aufgrund unterschiedlicher Ausgestaltung verschieden schwer sein kann, oder zur Anpassung an andere Einflüsse kann der obere Anschlußhaken 12 der Feder 10 in eine entsprechende andere Aufnahmeöffnung 9 des Federaufnahmebandes 8 eingehängt werden, so daß sich die Federvorspannung entsprechend ändert. In Fig. 5 ist der Anschlußhaken 9 in die oberste Aufnahmeöffnung 9 eingehängt, was der größtmöglichen Spannung der Feder sowohl im vorgespannten als auch im höchstgespanntem Zustand bei geschlossenem Torblatt 3 entspricht. Man erkennt aus Fig. 5, daß hier die Umhüllung 14 ihre größte Längsausdehnung einnimmt, die Hülsen 15 - 17 also vollständig ausgezogen sind, wie dies Figur 7 erkennen läßt.

Anhand der Figuren 6, 7 und 8 wird das Ausführungsbeispiel der abgeschirmten Feder genauer erläutert. Die sehr schematische Längsschnittdarstellung gem. Fig. 6 entspricht der Prinzipdarstellung gem. Fig. 3, d. h. die Feder ist völlig ungedehnt, und der Federkörper 11 befindet sich im Zustand seiner geringstmöglichen Längsausdehnung. In diesem Falle sind die Hülsen 15 bis 17 praktisch völlig ineinander geschoben, wie dies Fig. 6 erkennen läßt. Die Hülsen sind derart angeordnet - Fig. 7 -, daß ihr Durchmesser - in einer Längsrichtung des Teleskopes gesehen - von Hülse zu Hülse abnimmt. Die den Federenden 18 zugeordneten Endbereiche 19 der obersten Hülse 15 und der untersten Hülse 17 weisen jeweils einen Deckel 20 auf, der eine Durchführungsöffnung 21 für den jeweils zugehörigen Anschlußhaken 12 aufweist. Das bedeutet, daß der auf den zugehörigen Endbereich 19 der Hülse 15 bzw. 17 aufgesetzte Deckel stirnseitig den Federkörper 11 aus den Federwendeln zugewandt ist. Nach Ineinandersetzen der Hülsen 15 bis 17 zu dem Teleskoprohr bzw. der Umhüllung 14 und deren Ineinanderschieben wird die Feder 10 in den Hohlraum der Hülse 17 geringsten Durchmessers eingeführt, woraufhin die Deckel 20 auf die Hülsenendbereiche 19 aufgesetzt werden, und zwar unter Durchtritt der Anschlußhaken 12. In diesem Zustand können die Deckel mit der Hülse fest verbunden werden, was auf verschiedene Weise geschehen kann, beispielsweise durch Umbördeln um den entsprechend verdickt ausgebildeten Rand des Endbereiches 19 der Hülse 15 bzw. 17. Man kann natürlich einen der Deckel bereits vor Einsatz der Feder an den zugehörigen Endbereich 19 befestigen und dann die Feder einsetzen, deren entsprechender hakenförmiger Ansatz 12 dann durch den Schlitz 21 geführt werden muß.

Die Hülsenenden 24 sämtlicher Hülsen, mit Ausnahme der Endbereiche 19 sind mit Vorsprüngen 25 versehen, die beispielsweise durch Umbördeln aus dem Hülsenmaterial gebildet sind und eine Hakenform aufweisen, dergestalt, daß der Auslauf-Randbereich der über den Umfang hinaus durchgehend ausgebildeten Vorsprünge 25 in Parallellage zu der Mantelwandung 27 der jeweils selben Hülse zurückgebogen ist. Dadurch entsteht zwischen dieser Mantelwandung 27 und dem Auslauf-Randbereich 26 des Vorsprunges 25 eine ringförmige Nut 28.

Wie Figur 7 erkennen läßt, ist jeweils im Bereich des Überganges von einer Hülse geringeren Durchmessers zu einer solchen größeren Durchmessers der Vorsprung 25 der Hülse geringeren Durchmessers radial nach außen und der Vorsprung 25 der Hülse größeren Durchmessers radial nach innen ausgeformt. Dadurch erreicht man, daß die auf volle Teleskoplänge auseinandergezogenen Hülsen mit den Vorsprüngen derart ineinander eingreifen, daß jeweils die Auslaufrandbereiche 26 der einen Hülse in die ringförmige Nut 28 der anderen Hülse eingreifen, wie dies die schematische Schnittansicht gem. Fig. 7 deutlich erkennen läßt.

Den verdickten Rand der beiden Endbereiche 19 für das Festlegen der jeweils zugehörigen Deckel 20 durch Anbördeln kann man wie die Vorsprünge 25 ausbilden, und zwar jeweils radial nach außen abragend sowohl bei der Hülse 15 als auch der Hülse 17. Beim Umbördeln werden dann die Vorsprünge 25 auf die Mantelfläche 27 zu verformt. Dies ist allerdings nur ein Beispiel der Festlegung, das es erlaubt, die Anbördelvorgänge zur Gewinnung der Vorsprünge 25 insoweit auch für die vorbereitende Festlegung des Deckels 20 mit zu verwenden.

Fig. 8 zeigt eine Draufsicht auf den oberen Deckel 20, der neben der Durchtrittsöffnung 21 für den Anschlußhaken 12 einen Durchführungsschlitz 22 aufweist, der senkrecht zur der Öffnung 21 verläuft und somit zusammen mit dieser eine kreuzförmige Ausnehmung bildet. Der Durchführungsschlitz 22 dient dazu, das untere Ende des Federaufnahmebandes in den Federkörper 11 eingreifen zu lassen, wenn der Anschlußhaken 12 in eine weiter oben gelegene Aufnahmeöffnung 9 des Federaufnahmebandes eingehängt wird, wie dies Fig. 5 zeigt.

Figur 9 zeigt ein vorgefertigtes Federelement mit einer Umhüllung 14 aus zwei Hülsen 15 und 16, die teleskopartig ineinander verschiebbar sind und die an entgegengesetzten Enden jeweils mit einem Deckel 20 versehen sind. Die Hülsen sind im zusammengeschobenen Zustand länger als der völlig ungespannte Federkörper 11, sie sind nämlich so lang, wie der Federkörper 11 im Zustand einer bestimmten Vorspannung ist, die insbesondere der niedrigsten Spannung entspricht, die im bestimmungsgemäßen Betrieb auftritt. Diese Bauart hat den Vorteil, daß man mit einer aus zwei Hülsen 15 und 16 bestehenden Umhüllung 14 auskommt, wenn die Feder im maximalen Betriebsausdehnungszustand nicht mehr als das Doppelte ihrer Länge einnimmt, die sie im minimalen Betriebsausdehnungszustand einnimmt. Beim hier betrachteten Fall einer Gewichtsausgleichsfeder für ein Überkopftor sind solche Betriebsverhältnisse in etwa gegeben. Bei dieser Ausbildung wird die Feder entweder in einem Vorspannungszustand gehalten, wenn die Umhüllung aufgebracht und die Deckel geschlossen werden, oder die Feder wird nachträglich durch ein zuvor angebrachtes Hilfsband aus der fertiggestellten zusammengeschobenen Umhüllung herausgezogen und in dieser Lage festgelegt. Dies kann - wie in Figur 9 symbolisch dargestellt - durch Abstandselemente 29 geschehen, die zwischen den Anschlußhaken 12 und den jeweils benachbarten Deckeln 20 eingesetzt werden. Es ist auch möglich, im Nahbereich des Deckels durch die Hülsenenden einen Stift zu treiben, der die oberen Wendel des Federwendelkörpers 11 entsprechend halten. Eine derart vorgefertigt angelieferte Feder ist bereits zumindest weitgehend in dem Vorspannungszustand, der ihrer geringsten Betriebsspannung entspricht. Sie kann daher entsprechend leicht und natürlich geschützt handhabbar in dieser Betriebsstellung eingesetzt werden. Danach werden die Sperren 29 entfernt. Auf diese Weise erhält man ein besonders sparsam gebautes und einfach zu handhabendes, vorgefertigtes Federelement.

Durch die serienmäßige Vorfertigung der Feder mit Umhüllung als insoweit abgeschlossenen Bauelement vor dem Einsatz bei einem Tor oder dgl. erreicht man eine einfache, maschinelle Herstellung und sichere Ausbildung der Umhüllung, und zwar aufgrund von guter Lastverteilung und formschlüssiger Halterung der Hülsenenden 24 aneinander bei größter Federdehnung, wodurch die Hülsen entsprechend schwach dimensioniert und kurz ausgebildet werden können, so daß Material und Gewicht eingespart wird. Durch die vollständige Kapselung bereits im ungedehnten oder licht, allenfalls bis zur niedrigsten Betriebsvorspannung gedehnten Zustand läßt sich die Feder mühelos und ohne Gefahr in ihre Vorspannlage einsetzen. Sie bietet damit nicht nur Schutz gegen Fingereingriff und Federbruchschäden während des Betriebes, sondern sie schützt in entsprechender Weise den Monteur bei der Herstellung des Tores oder Auswechslung der Feder.

## Patentansprüche

1. Abgeschirmte Schraubenzugfeder für Tore, Türen oder dgl. Gebäudeabschlüsse, insbesondere als Gewichtsausgleichseinrichtung für über Kopf bewegbare Torblätter (3), mit einer längenveränderlichen Schutzumhüllung aus wenigstens zwei teleskopartig gegeneinander verschiebbaren Hülse (15, 17) dren an den mit in Federlängsrichtung vorspringend ausgebildeten Anschlußhaken versehenen Federenden (18) gelegene Endbereiche (19) an dem Schraubenfederkörper (11) stirnseitig abgestützt sind, dadurch gekennzeichnet, daß die an den Federenden (18) befindlichen Endbereiche (19) der Hülsen (15, 17) mit Deckeln (20) versehen sind, die jeweils eine Durchtrittsöffnung (21) für den Anschlußhaken (12) des zugehörigen Federendes (18) aufweisen, und daß die anderen über die Teleskopverschiebestrecke hinweg der Mantelwandung (27) der jeweilig benachbarten Hülse (15 bzw. 16 bzw. 17) zugewandt bleibenden Hülsenenden (24) in der längstmöglichen Teleskopausziehstellung gegen eine weitere Ausziehbewegung sperrend miteinander in Verbindung treten.

2. Feder nach Anspruch 1, dadurch gekennzeichnet, daß die Hülsenenden (24) mit jeweils auf die innere bzw. äußere Fläche der Mantelwandung (27) der jeweils benachbarten Hülse (15 bzw. 16 bzw. 17) zu gerichtet radial abstehenden Vorsprüngen (25) versehen sind, die in der längsmöglichen Teleskopausziehstellung formschlüssig miteinander in Verbindung treten.

3. Feder nach Anspruch 2, dadurch gekennzeichnet, daß die Ränder der Hülsenenden (24) unter Bildung von hakenförmigen Vorsprüngen (25) in etwa Parallellage zu der Mantelwandung (27) der zugehörigen Hülse (15 bzw. 16 bzw. 17) auslaufend ausgebildet sind.

4. Feder nach Anspruch 2 oder 3, dadurch gekennzeichnet, daß die Vorsprünge (25) ringförmig umlaufend ausgebildet sind und zwischen sich und der zugehörigen Mantelwandung (27) jeweils eine ringförmige Nut (28) bilden, deren radiale Weite größer ist als die radiale Breite des Vorsprunges (25) der jeweils benachbarten Hülse (15 bzw. 16 bzw. 17).

5. Feder nach einem der Ansprüche 1 bis 4, dadurch gekennzeichnet, daß der Deckel an dem Endbereich der zugehörigen Hülse einstückig mit dieser ausgebildet ist.

6. Feder nach einem der Ansprüche 1 bis 4, dadurch gekennzeichnet, daß der Deckel (20) an dem Endbereich (19) der zugehörigen Hülse (15 bzw. 17) formschlüssig festgelegt ist.

7. Feder nach Anspruch 6, dadurch gekennzeichnet, daß der Deckel (20) an der zugehörigen Hülse (15 bzw. 17) durch Umbördeln um einen entsprechend verdickt ausgebildeten Endbereich (19) festgelegt ist.

8. Feder nach Anspruch 7, dadurch gekennzeichnet daß die Verdickung im Endbereich (19) der Hülse (15, 17) gleich oder ähnlich ausgebildet ist wie der Vorsprung (25) am entgegengesetzten Hülsenende (24) in durch das Umbördeln eingedrücktem Zustand.

9. Feder nach einem der Ansprüche 1 bis 8, dadurch gekennzeichnet, daß der Deckel (20) neben einer schlitzförmigen Durchtrittsöffnung (21) für den Anschlußhaken (12) des zugehörigen Federendes (18) einen Durchführungsschlitz (22) für ein Federaufnahmeband (8) aufweist, der mit der Durchtrittsöffnung (21) zusammen eine etwa kreuzförmige Aussparung (23) bildet.

10. Feder nach einem der Ansprüche 1 bis 9, dadurch gekennzeichnet, daß mehr als zwei, insbesondere drei, Hülsen (15 - 17) hintereinander teleskopartig gegeneinander verschiebbar angeordnet sind.

11. Feder nach Anspruch 10, dadurch gekennzeichnet, daß die Hülsen (15 - 17) in ihrer Aufeinanderfolge mit abnehmendem Durchmesser ausgebildet sind.

12. Feder nach einem der Ansprüche 1 bis 11, dadurch gekennzeichnet, daß die Hülsen (15 - 17) aus Metall, insbesondere Stahlblech, bestehen.

13. Feder nach einem der Ansprüche 1 bis 11, dadurch gekennzeichnet, daß die Hülsen aus Kunststoff bestehen.

14. Feder nach einem der Ansprüche 1 bis 12, dadurch gekennzeichnet, daß im Angriffsbereich zwischen den Vorsprüngen (25) der Hülsen (15 - 17) und den diesen zugewandten Mantelwandungsflächen der jeweils benachbarten Hülsen (15 bzw. 16 bzw. 17) Gleitschichten vorgesehen sind.

15. Feder nach einem der Ansprüche 1 bis 14, dadurch gekennzeichnet, daß die Hülsen (15 - 17) insgesamt mit einem Kunststoff guter Gleiteigenschaft beschichtet sind.

16. Feder nach einem der Ansprüche 1 bis 15, dadurch gekennzeichnet, daß die Umhüllung (14) bei völlig zusammengeschobener Teleskopstellung der Hülsen (15 - 17) auf kleinste Länge nicht länger ist als der Federwendelkörper (11) in völlig ungedehntem Zustand.

17. Feder nach einem der Ansprüche 1 bis 9 und 12 bis 15, dadurch gekennzeichnet, daß die Umhüllung (14) bei völlig zusammengeschobener Teleskopstellung der Hülsen (15, 16) auf kleinste Länge nicht länger ist als der Federwendelkörper (11) in einem Vorspannzustand kleiner oder gleich demjenigen der geringsten Betriebsspannung der Feder.

18. Feder nach Anspruch 17, dadurch gekennzeichnet, daß die Umhüllung (14) aus zwei teleskopartig gegeneinander verschiebbaren Hülsen (15, 16) besteht.

19. Feder nach einem der Ansprüche 1 bis 18, dadurch gekennzeichnet, daß die Enden des Federkörpers (11) im jeweiligen Deckelbereich der Umhüllung (14) gegen ein Versetzen in das Innere der Umhüllung (14) gehalten sind.

20. Verfahren zur Herstellung einer umhüllten Schraubenzugfeder nach einem der Ansprüche 1 bis 19, dadurch gekennzeichnet, daß die Hülsen (15, 16; 15 - 17) insoweit vorgefertigt zu dem Teleskoprohr (14) zusammengesetzt werden, in welches dann der mit den Anschlußhaken (12) vorgefertigte Schraubenfederkörper (11) eingesetzt wird, worauf das Teleskoprohr stirnseitig bis auf die Durchtrittsöffnung (21) bzw. diese und den Durchführungsschlitz (22) unter Bildung des bzw. Aufsetzen des insoweit vorgefertigten Deckels (20) verschlossen wird und als insoweit selbständiges Bauteil für den Einbau am Ort der Fertigung oder der Verwendung des Tores (1) zur Verfügung steht.

**Claims**

1. Crovered spiral tension spring for gates, doors or similar building closures especially as a weight balancing device for overhead movable door leafs (3), with a length adjustable protective covering composed of at least two sleeves (15, 17) telescopically displaceable with respect to one another, the end regions thereof (19) situated at the ends (18) of the spring which have connecting hooks constructed to protect in the longitudinal direction of the spring are supported frontally at the spiral spring body (11), characterised in that the end regions (19) of the sleeves (15, 17) located at the spring ends (18) are provided with covers (20) each having an opening (21) for the connecting hook (12) of the associated spring end (18) and that throughout the extent of telescopic displacement the other sleeve ends (24) remaining facing the cover wall (27) of the respective adjacent sleeve (15 or 16 or 17), in the longest possible telescopic extension position, come into locking connection with one another against a further extension movement.

2. Spring according to claim 1, characterised in that the sleeve ends (24) are respectively provided with radially spaced projections (25) directed towards the inner or outer surface of the cover wall (27) of the respectively adjacent sleeve (15 or 16 or 17), said projections being shaped to interengage with one other in the longest possible telescopic extension position.

3. Spring according to claim 2, characterised in that the rims of the sleeve ends (24) are terminated by the formation of hook-like projections (25) generally parallel to the sleeve wall (27) of the associated sleeve (15 or 16 or 17).

4. Spring according to claim 2 or 3, characterised in that the projections (25) have an annular shape and each form an annular groove (28) between themselves and the respective cover wall (27), the radial width thereof being greater than the radial width of the projection (25) of the respectively adjacent sleeve (15 or 16 or 17).

5. Spring according to one of claims 1 to 4, characterised in that the cover at the end region of the associated sleeve is formed in one piece with the same.

6. Spring according to one of claims 1 to 4, characterised in that the cover (20) at the end region (19) of the associated sleeve (15 or 17) is secured in position by being shaped to interengage with said sleeve.

7. Spring according to claim 6, characterised in that the cover (20) is secured on the associated sleeve (15 or 17) by being flanged round a correspondingly thickened end region (19).

8. Spring according to claim 7, characterised in that the thickening in the end region (19) of sleeve (15, 17) is the same or similarly formed as the projection (25) on the opposite sleeve end (24) in the impressed state due to flanging.

9. Spring according to one of claims 1 to 8, characterised in that the cover (20) apart from a slit-shaped opening (21) for the connecting hook (12) of the associated end of the spring (18) has an entry slit (22) for a spring mounting strip (8), which together with the opening (21) forms an approximately cross-shaped cut-out (23).

10. Spring according to one of claims 1 to 9, characterised in that more than two, especially three, sleeves (15 - 17) are arranged in series and are telescopically displaceable with respect to one another.

11. Claim according to claim 10, characterised in that the sleeves (15 - 17) in their series arrangement are formed with decreasing diameter.

12. Spring according to one of the claims 1 to 11, characterised in that the sleeves (15 - 17) are made of metal, especially sheet steel.

13. Spring according to one of claims 1 to 11, characterised in that the sleeves are made of synthetic material.

14. Spring according to one of claims 1 to 12, characterised in that anti-friction layers are provided in the area of engagement between the projections (25) of the sleeves (15 - 17) and the surfaces of the cover walls of the respectively adjacent sleeves (15 or 16 or 17) facing said projections.

15. Spring according to one of claims 1 to 14, characterised in that the sleeves (15 - 17) are fully coated with a synthetic material of good anti-friction property.

16. Spring according to one of claims 1 to 15, characterised in that with the sleeves (15 - 17) in the fully retracted telescopic position, the covering (14) at its smallest length is not longer than the spring coil body (11) in a fully unstretched state.

17. Spring according to one of claims 1 to 9 and 12 to 15, characterised in that with the sleeves (15, 16) in the fully retracted telescopic position, the covering (14) at its smallest length is not longer than the spring coil body (11) in an initial tension state being smaller or equal to that of the smallest operating tension of the spring.

18. Spring according to claim 17, characterised in that the covering (14) consists of two sleeves (15, 16) which are telescopically displaceable with respect to one another.

19. Spring according to one of claims 1 to 18, characterised in that the ends of the spring body (11) in the respective cover region of the protective covering (14) are fixed against a displacement inside the covering (14).

20. Process for the manufacture of a covered spiral tension spring according to one of claims 1 to 19, characterised in that the sleeves (15, 16; 15 - 17), suitably prefabricated, are assembled to form a telescopic tube (14) into which is then inserted the wound spring body (11) prefabricated with connecting hooks (12), after which the telescopic tube is closed frontally, but for the opening (21) or said opening and the entry slit (22), by forming or attaching a suitably prefabricated cover (20) and is thus available as an independent component for fitting at the place of manufacture or at the place of use of the gate (1).

**Revendications**

1. Ressort de traction hélicoïdal protégé, pour des portails, des portes ou des fermetures analogues de bâtiments, notamment sous la forme de dispositif d'équilibrage du poids pour des panneaux de portail (3) se déplaçant au-dessus de la tête, avec une enveloppe de protection de longueur modifiable, constituée d'au moins deux douilles (15, 17) susceptibles de coulisser télescopiquement l'une par rapport à l'autre, dont les zones terminales, placées contre les extrémités (18) du ressort munies de crochets de raccordement faisant saillie en direction longitudinale du ressort, prennent appui du côté frontal sur le corps (11) du ressort, ressort caractérisé en ce que les zones terminales (19) des douilles (15, 17) se trouvant contre les extrémités (18) du ressort, sont munies de couvercles (20) qui comportent chacun un orifice de passage (21) pour le crochet de raccordement (12) de l'extrémité correspondante (18) du ressort, et les autres extrémités (24) des douilles restant en regard de la douille respectivement voisine (15 ou 16 ou 17) le long de l'étendue de déplacement télescopique de la paroi (27) de l'enveloppe, viennent en contact les unes avec les autres dans la position correspondant à l'extension télescopique le plus longue possible, s'opposant ainsi à un mouvement d'extension supplémentaire.

2. Ressort selon la revendication 1, caractérisé en ce que les extrémités (24) des douilles sont munies de saillies (25) s'écartant radialement et dirigées respectivement vers la surface interne ou externe de la paroi-enveloppe (27) de la douille respectivement voisine (15 ou 16 ou 17), ces saillies venant en contact, avec interpénétration de formes entre elles, dans la position d'extension télescopique maximale.

3. Ressort selon la revendication 2, caractérisé en ce que les bords des extrémités (24) des douilles, en formant des saillies en forme de crochet (25), se terminent à peu près parallèlement à la surface-enveloppe de la douille correspondante (15 ou 16 ou 17).

4. Ressort selon la revendication 2 ou 3, caractérisé en ce que les saillies (25) sont de forme annulaire périphérique et ménagent, entre elles et la paroi-enveloppe correspondante (27), une gorge annulaire (28) dont la largeur radiale est supérieure à la largeur radiale de la saillie (25) de la douille respectivement voisine (15 ou 16 ou 17).

5. Ressort selon une des revendications 1 à 4, caractérisé en ce que le couvercle à l'extrémité de la douille correspondante est d'une seule pièce avec celle-ci.

6. Ressort selon une des revendications 1 à 4, caractérisé en ce que le couvercle (20) est fixé par interpénétration de formes à l'extrémité (19) de la douille correspondante (15 ou 17).

7. Ressort selon la revendication 6, caractérisé en ce que le couvercle (20) est fixé à la douille correspondante (15 ou 17) par rabattement autour d'une partie terminale (19) dont l'épaisseur a été augmentée de façon appropriée.

8. Ressort selon la revendication 7, caractérisé en ce que l'épaississement sur la partie terminale (19) des douilles (15, 17), lorsqu'il a reçu l'empreinte du rabattement, a une conformation identique ou analogue à celle de la saillie (25) à l'extrémité opposée (24) de la douille.

9. Ressort selon une des revendications 1 à 8, caractérisé en ce que le couvercle (20), en plus d'un orifice de passage (21) en forme de fente, pour le crochet de raccordement (12) de l'extrémité correspondante (18) du ressort, comporte pour une bande d'accrochage du ressort, une fente de passage (22) qui forme avec l'orifice de passage (21) un ajour (23) à peu près cruciforme.

10. Ressort selon une des revendications 1 à 9, caractérisé en ce que plus de deux douilles (15 à 17), notamment trois, sont disposées l'une derrière l'autre en étant susceptibles de coulisser télescopiquement les unes par rapport aux autres.

11. Ressort selon la revendication 10, caractérisé en ce que les douilles successives (15 à 17) ont des diamètres décroissants.

12. Ressort selon une des revendications 1 à 11, caractérisé en ce que les douilles (15 à 17) sont en métal, notamment en tôle d'acier.

13. Ressort selon une des revendications 1 à 11, caractérisé en ce que les douilles sont en matière plastique.

14. Ressort selon une des revendications 1 à 12, caractérisé en ce que, dans la zone d'entrée en prise, entre les saillies (25) des douilles (15 à 17) et les surfaces de paroi-enveloppe des douilles respectivement voisines (15 ou 16 ou 17), en regard de ces saillies, il est prévu des couches de glissement.

15. Ressort selon une des revendications 1 à 14, caractérisé en ce que les douilles (15 à 17) sont revêtues dans leur totalité d'une matière plastique ayant de bonnes propriétés de glissement.

16. Ressort selon une des revendications 1 à 15, caractérisé en ce que l'enveloppe (14), lorsque les douilles (15 à 17) sont complètement rassemblées à la plus petite longueur, n'est pas plus longue que le corps hélicoïdal (11) du ressort lorsque celui-ci est complètement détendu.

17. Ressort selon une des revendications 1 à 9 et 12 à 15, caractérisé en ce que l'enveloppe (14), lorsque les douilles (15, 16) sont complètement rassemblées à la plus petite longueur, n'est pas plus longue que le corps hélicoïdal (11) du ressort dans un état de précontrainte inférieur ou identique à celui correspondant à la contrainte minimale du ressort en fonctionnement.

18. Ressort selon la revendication 17, caractérisé en ce que l'enveloppe (14) est constituée par deux douilles (15, 16) susceptibles de coulisser télescopiquement l'une par rapport à l'autre.

19. Ressort selon une des revendications 1 à 18, caractérisé en ce que les extrémités du corps (11) du ressort, dans les zones des couvercles de l'enveloppe (14), sont maintenues pour empêcher un décalage dans l'intérieur de l'enveloppe.

20. Procédé pour réaliser un ressort de traction hélicoïdal enveloppé, selon une des revendications 1 à 19, procédé caractérisé en ce que les douilles (15, 16; 15 à 17), en tant que pièces préfabriquées, sont assemblées pour constituer le tube télescopique (14), dans lequel est ensuite mis en place le corps (11) du ressort hélicoïdal préfabriqué avec le crochet de raccordement (12), après quoi le tube télescopique est fermé côté frontal, à l'exception de l'orifice de passage (21) ou bien à l'exception de cet orifice et de la fente de passage (22), en façonnant, ou bien en mettant en place en tant que pièce préfabriquée, le couvercle (20), et le tube télescopique est alors disponible, en tant que pièce constitutive indépendante, pour son montage à l'emplacement de fabrication ou d'utilisation du portail (1).

Fig.1

Fig.2

Fig.3

Fig. 4

Fig. 5

*Fig. 7*

*Fig. 8*

*Fig. 6*

Fig. 9